# EUROPÄISCHE PATENTSCHRIFT

(11) **EP 1 281 310 B1**
(45) Veröffentlichungstag und Bekanntmachung des Hinweises auf die Patenterteilung: **25.01.2006**
(21) Anmeldenummer: 02015330.0
(22) Anmeldetag: 10.07.2002
(51) Int. Cl.: A01D 41/12

(54) **Erntmaschine mit Geschwindigkeitssteuerung**
Harvesting machine with speed control
Machine de récolte avec contrôle de la vitesse

(30) Priorität: 30.07.2001 US 918266
(43) Veröffentlichungstag der Anmeldung: 05.02.2003
(73) Patentinhaber: DEERE & COMPANY, Moline, Illinois 61265-8098 (US)
(72) Erfinder: Coers, Bruce Alan, Hillsdale, IL 61257 (US); Littke, Jerry Dean, Hillsboro, ND 58045 (US)
(74) Vertreter: Holst, Sönke

(56) Entgegenhaltungen:
- DE-A- 2 436 072
- DE-A- 2 743 961
- GB-A- 2 057 837
- US-A- 3 540 028
- US-A- 3 606 742
- US-A- 4 487 002
- US-A- 4 776 153
- US-A- 5 704 200
- US-A- 5 937 621

## Beschreibung

Die Erfindung betrifft eine Erntemaschine mit einem höhenverstellbaren Erntevorsatz zur Aufnahme von Erntegut und einer zum Beeinflussen der Vortriebsgeschwindigkeit der Erntemaschine eingerichteten Geschwindigkeitssteuerung.

Eine solche Erntemaschine ist aus der DE-A-2436072 bekannt.

Eine selbstfahrende Erntemaschine wie ein Mähdrescher weist typischerweise einen Vorsatz zum Eingreifen in das Erntegut auf. Ein automatisches Höhensteuerungssystem, das einen mechanischen Fühler oder einen akustischen Sensor oder ähnliche, kontaktlose Bodenfühleinrichtungen aufweist, hält den Vorsatz innerhalb eines gewünschten Höhenbereichs über dem Boden. Der Bediener kann den Vorsatz auch manuell steuern, um die Einheit anzuheben und abzusenken, wie es erforderlich ist, um unterschiedliche Feldbedingungen auszugleichen, wie Bedingungen mit hohen oder niedrigen Ausbeuten, unregelmäßige Bodenoberflächenbedingungen und durchnässte Gutbedingungen. Bei Mähdreschern, die einen Mähwerksbalken aufweisen, der das Gut unterhalb der Ähren abschneidet und das abgeschnittene Gut einem mittigen Schrägförderer zuführt, hat eine Änderung der Höhe des Erntevorsatzes in der Regel eine beträchtliche Änderung der Menge des in den Schrägförderer eintretenden Materials zur Folge. Ein Absenken des Vorsatzes kann unmittelbar ein Ansteigen des Materials zur Folge haben, das in den Schrägförderer eingeführt und von der Erntemaschine verarbeitet wird. Das Anheben des Vorsatzes vermindert den Materialbetrag.

Verschiedene Einrichtungen sind verfügbar, um die Menge des in den Schrägförderer oder in die Dresch- und Trenneinrichtung eintretenden Materials zu erfassen und die Geschwindigkeit des Mähdreschers als Reaktion auf Änderungen im Material zu ändern, um einen im Wesentlichen konstanten Durchsatz aufrecht zu erhalten, wobei die Verzögerung in der Antwortzeit bei derartigen Systemen häufig einen anfänglichen, übermäßigen Materialbetrag im Schrägförderer, an der Leittrommel und in der Dresch- und Trenneinrichtung zur Folge hat, kurz nachdem der Vorsatz aus irgendeinem Grund schnell abgesenkt wurde. Als ein Ergebnis eines derartigen Absenkens des Vorsatzes wird der Mähdrescher schwer belastet, was dazu führt, dass Kornverluste, Leistungsanforderungen und die Wahrscheinlichkeit von Verstopfungen, Abnutzungen und vorzeitigen Komponentenfehlern ansteigen. Das Anheben des Vorsatzes hat eine kleine Periode des Mähdrescherbetriebs unterhalb der Kapazität zur Folge, so dass die Maschinenproduktivität vermindert ist.

Die der Erfindung zu Grunde liegende Aufgabe wird darin gesehen, ein verbessertes Geschwindigkeitssteuerungssystem für einen Mähdrescher oder eine andere Erntemaschine bereitzustellen, die einen verstellbaren Vorsatz mit einem Mähwerksbalken aufweist. Es sollen die oben genannten Probleme gelöst werden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die erfindungsgemäße Erntemaschine weist eine Einrichtung zur Messung und/oder Vorgabe der Position des Erntevorsatzes auf, die eine Positionsinformation bereitstellt. Diese Positionsinformation wird einer Geschwindigkeitssteuerung zugeführt, die zum Vorgeben der Vortriebsgeschwindigkeit der Erntemaschine eingerichtet ist. Um den Gutdurchsatz oder einen anderen Arbeitsparameter der Erntemaschine konstant zu halten, wird die Vortriebsgeschwindigkeit geändert, wenn die Positionsinformation darauf hinweist, dass der Erntevorsatz angehoben bzw. abgesenkt wird. Beim Absenken des Erntevorsatzes ist eine Zunahme an aufgenommenen Erntegut zu erwarten, deshalb wird die Vortriebsgeschwindigkeit abgesenkt. Beim Anheben ist mit einer Abnahme des Ernteguts zu rechnen, die Vortriebsgeschwindigkeit wird angehoben, um den Durchsatz o. dgl. aufrecht zu erhalten.

Plötzliche Anstiege der Gutflussraten, die Folge vertikaler Verstellungen des Erntevorsatzes sind, werden durch die Erfindung selbsttätig ausgeglichen. Es wird nicht erst abgewartet, bis das Gut in die Erntemaschine gelangt und dort mit einem die Vortriebsgeschwindigkeit steuernden Sensor zusammenwirkt, der erst dann eine Geschwindigkeitsänderung bewirkt, sondern die bereits vorher bereitstehende Positionsinformation wird ausgewertet. Auf diese Weise werden die Probleme vermindert, die mit schnellen Variationen des Durchsatzes der Erntemaschine verbunden sind, welche durch Verstellungen des Erntevorsatzes entstehen. Eventuelle Verstopfungen, übermäßige Belastungen, übermäßiger Verschleiß und Kornverluste, die durch derartige Verstellungen entstehen, werden vermieden. Die Produktivität der Erntemaschine ist wesentlich verbessert.

Die Positionsinformation kann durch im Bodenkontakt befindliche oder berührungslos arbeitende Umsetzer gewonnen werden, die am Erntevorsatz angebracht sind. Es kann auch der Winkel zwischen einem Schrägförderer und der Erntemaschine gemessen werden, um die Positionsinformation zu generieren. Denkbar ist auch die Verwendung der Stellsignale, die Aktoren zugeführt werden, welche die Position des Erntevorsatzes definieren, um eine Positionsinformation zu gewinnen.

Um das Problem von Verstopfungen und übermäßiger Belastungen der Erntemaschine nach dem Absenken des Erntevorsatzes zu vermeiden, der zu einem plötzlichen Anstieg des Gutdurchsatzes führt, ändert vorzugsweise die Geschwindigkeitssteuerung die Vortriebsgeschwindigkeit ohne Verzögerung, sobald sie einen Hinweis auf die Positionsänderung des Erntevorsatzes erhält. Auch nach dem Anheben des Erntevorsatzes kann die Vortriebsgeschwindigkeit sofort gesteigert werden, obwohl dieser Vorgang weniger kritisch ist.

Der Betrag der Änderung der Vortriebsgeschwindigkeit ist vorzugsweise vom Betrag der Positionsänderung des Erntevorsatzes abhängig. Anhand der Positionsinformation kann der zu erwartende Gutdurchsatz abgeschätzt werden, der als Folge der Höhenänderung des Erntevorsatzes von der Erntemaschine zu verarbeiten sein wird. Zur Abschätzung des nach der Positionsänderung zu erwartenden Gutdurchsatzes kann eine auf der Guthöhe basierende Kalibrierung durchgeführt werden. Letztendlich wird eine geeignete, geänderte Vortriebsgeschwindigkeit berechnet und eingestellt.

Manche Positionsänderungen des Erntevorsatz haben nur einen geringen Einfluss auf den Gutdurchsatz. Beispielsweise eine mit einem optischen Sensor durchgeführte Höhensteuerung, bei der ein Mähwerksbalken eines Schneidwerks in einer bestimmten Entfernung unterhalb der Getreideähren bleibt, bedingt bei Änderungen der Ernteguthöhen oder der Bodenkontur Verstellungen des Erntevorsatzes. Diese Positionsänderungen haben aber nur geringfügige oder keine Änderungen des Gutdurchsatzes zur Folge und werden daher vorzugsweise von der Geschwindigkeitssteuerung ignoriert.

Die Vortriebsgeschwindigkeit wird von der Geschwindigkeitssteuerung vorzugsweise derart gesteuert, dass eine Erntebedingung der Erntemaschine, wie ein Gutdurchsatz oder Kornverluste in vorbestimmten Grenzen bleibt. Anhand der Positionsinformation kann eine voraussichtliche Änderung der Erntebedingungen bestimmt und zur Vortriebsgeschwindigkeitsberechnung herangezogen werden. Dabei kann ein Zusammenhang zwischen der Positionsänderung des Erntevorsatzes und der dadurch bedingten Änderung der Erntebedingung in Form einer Tabelle oder in einer beliebigen anderen Form in einem Speicher der Geschwindigkeitssteuerung abgelegt sein. Der Zusammenhang kann wenn nötig, wie bei Änderungen der Gutbedingungen, leicht aktualisiert werden. Vorzugsweise findet hier aber ein lernendes System Anwendung, das eingerichtet ist, die Änderungen der Erntebedingungen in Abhängigkeit von Änderungen der Positionsinformation zu erlernen und später die gelernte Erfahrung zu berücksichtigen.

Wird die Vortriebsgeschwindigkeit derart gesteuert, dass der Gutdurchsatz innerhalb eines vorbestimmten Bereichs bleibt, wird zweckmäßigerweise bei einem Anheben oder Absenken des Erntevorsatzes die Vortriebsgeschwindigkeit auch dann angepasst, wenn das Durchsatzsignal des Durchsatzsensors auf einen innerhalb des vorbestimmten Bereichs verbleibenden Durchsatz hinweist. Dadurch vermeidet man die Nachteile der langen Reaktionszeiten des Durchsatzsensors, die durch die Laufzeit des Ernteguts vom Erntevorsatz bis zum Durchsatzsensor bedingt sind.

In einer bevorzugten Ausführungsform berücksichtigt die Geschwindigkeitssteuerung auch Informationen über die Erntequalität der Erntemaschine, wie Kornverluste und -beschädigungen. Dabei wird überwacht, ob die Erntequalität innerhalb eines Zielbedingungsbereichs ist. Die Geschwindigkeitssteuerung steuert die Vortriebsgeschwindigkeit so, dass primär ein Zielbereich des Gutdurchsatzes erreicht wird. Die tatsächliche Erntequalität wird mit ihrem Zielbedingungsbereich verglichen, und wenn er verlassen wird, ändert die Geschwindigkeitssteuerung den Zielbereich des Gutdurchsatzes.

Nach dem Ablauf einer vorausgewählten Verzögerungszeit, d. h. wenn vom Erntevorsatz nach der Positionsänderung aufgenommenes Erntegut in der Erntemaschine verarbeitet und bei einer Vortriebsgeschwindigkeitsbestimmung berücksichtigt wird, kann eine normale Geschwindigkeitssteuerung, die beispielsweise auf dem Durchsatz basiert, wieder aufgenommen werden.

In den Zeichnungen ist ein nachfolgend näher beschriebenes Ausführungsbeispiel der Erfindung dargestellt. Es zeigt:
- Fig. 1: eine Seitenansicht einer Erntemaschine mit einem Vorsatzhöhensteuerungssystem,
- Fig. 2: ein Schema eines Steuersystems zum Anheben und Neigen des Vorsatzes für die Erntemaschine in Figur 1,

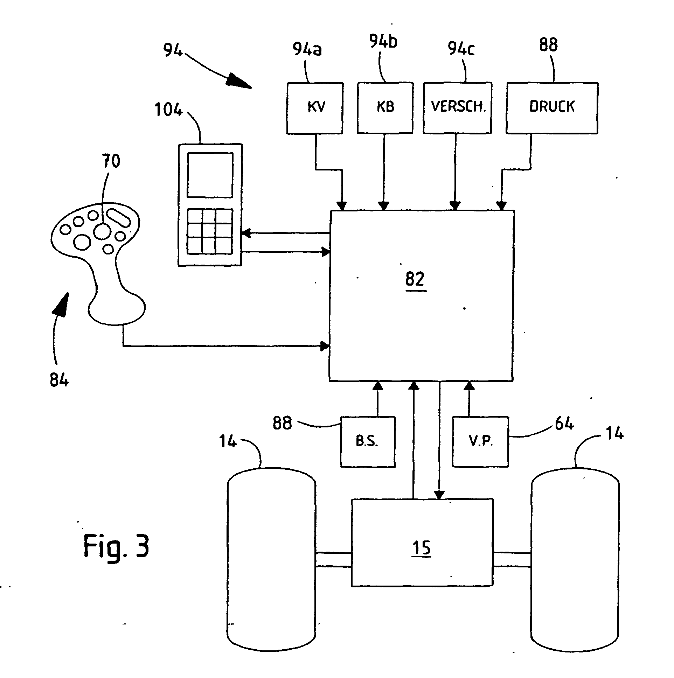

- Fig. 3: ein Schema eines Geschwindigkeitssteuerungssystems, das auf Vorsatzhöhenänderungen reagiert, und
- Fig. 4: ein Flussdiagramm für das Geschwindigkeitssteuerungssystem.

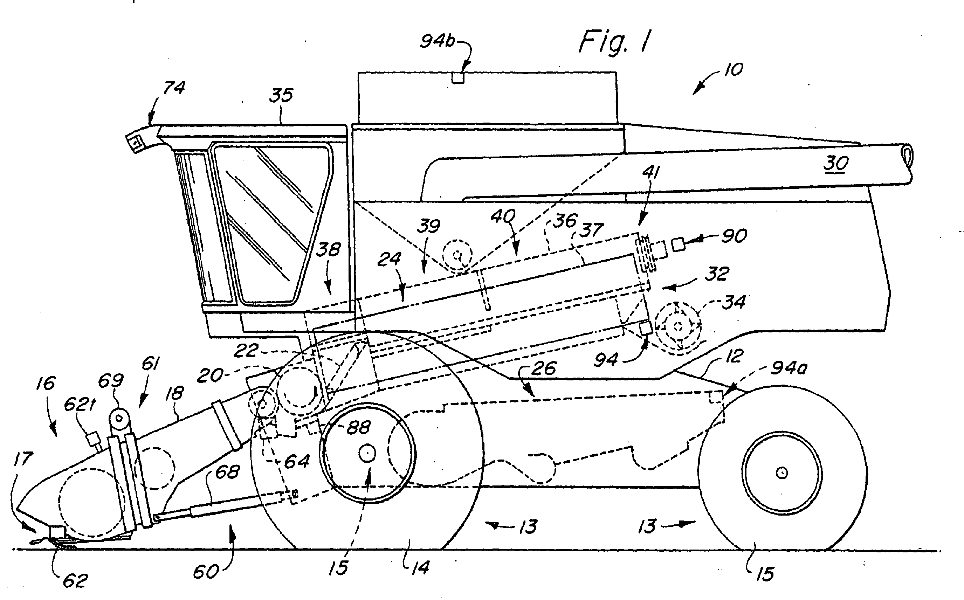

Es wird nun auf die Figur 1 verwiesen, in der eine landwirtschaftliche Erntemaschine in Form eines Mähdreschers 10 gezeigt ist, der einen Hauptrahmen 12 umfasst, der bewegbar durch eine Radanordnung 13 abgestützt wird, die vordere angetriebene Räder 14 aüfweist, die durch ein elektronisch gesteuertes hydrostatisches Getriebe 15 angetrieben werden. Obwohl Räder gezeigt werden, kann die Radanordnung 13 im Eingriff mit dem Boden befindliche Gleisketten umfassen oder daraus aufgebaut sein.

Ein vertikal verstellbarer Erntevorsatz 16 mit einem Mähwerksbalken 17 wird verwendet, stehendes Erntegut abzuschneiden und abgeschnittenes Gut einem Schrägförderer 18 zuzuführen. Der Schrägförderer 18 ist schwenkbar mit dem Hauptrahmen 12 verbunden und umfasst eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren Dresch- und Trenneinrichtung 24 zu. Andere Orientierungen und Typen der Drescheinrichtungen und andere Typen von Erntevorsätzen 16, wie quer angeordnete Rahmen, die einzelne Reiheneinheiten tragen, könnten auch verwendet werden.

Die rotierende Dresch- und Trenneinrichtung 24 drischt und trennt das geerntete Gut. Das Korn und die Spreu fallen durch Roste am Boden der Dresch- und Trenneinrichtung 24 in ein Reinigungssystem 26. Das Reinigungssystem 26 entfernt die Spreu und führt das saubere Korn einem (nicht gezeigten) Elevator zu. Der Elevator für sauberes Korn legt das saubere Korn in einem Korntank 28 ab. Das saubere Korn im Korntank 28 kann durch einen Entladeschneckenförderer 30 auf einen Lastwagen oder Anhänger entladen werden.

Ausgedroschenes, vom Korn befreites Stroh wird von der Dresch- und Trenneinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die drehbare Dresch- und Trenneinrichtung 24 umfasst ein zylindrisches Rotorgehäuse 36 und einen im Rotorgehäuse 36 angeordneten, hydraulisch angetriebenen Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 137 eine zylindrische Rotortrommel auf, die mit einer Anzahl von Dreschelementen versehen ist, um das vom Beschickungsabschnitt 38 erhaltene Gut zu dreschen.

Stromab des Dreschabschnitts 39 befindet sich der Trennabschnitt 40, in dem das im gedroschenen Gut noch gefangene Korn freigesetzt wird und durch ein bodenseitiges Rost im Rotorgehäuse 36 in das Reinigungssystem 26 fällt. Der Trennabschnitt 40 geht in einen Auslassabschnitt 41 über, in dem das vom Korn befreite Gut (Stroh) aus der Dresch- und Trenneinrichtung 24 ausgestoßen wird. Obwohl die Erntemaschine als Mähdrescher 10 zur Getreideernte gezeigt ist, ist anzumerken, dass die vorliegende Erfindung auch an anderen Typen von Erntemaschinen verwendet werden kann, die vertikal gesteuerte Vorsätze aufweisen.

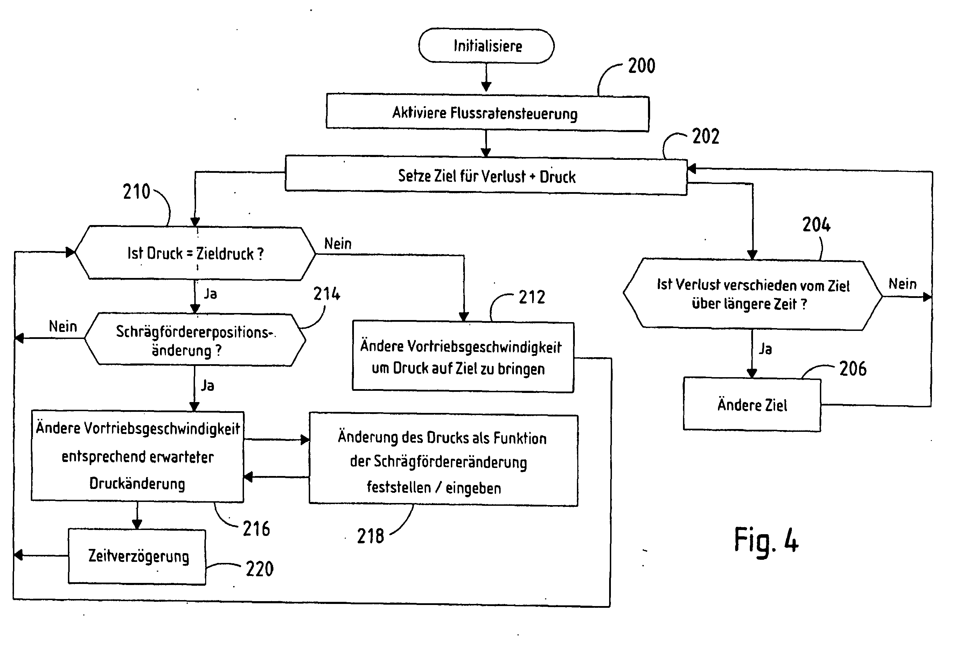

Die Höhe des Erntevorsatzes 16 wird durch ein hydraulisches Hubsystem gesteuert, das insgesamt mit 60 gekennzeichnet ist, und ein Erntevorsatzneigungssystem, das insgesamt mit 61 gekennzeichnet ist, kann auch bereitgestellt sein, um den Erntevorsatz 16 im Wesentlichen parallel zur Oberfläche des Bodens zu halten. Fühler 62 oder andere konventionelle Höhenfühleinrichtungen, wie akustische Sensoren 62t, die an quer beabstandeten Stellen auf dem Erntevorsatz 16 abgestützt sind, stellen eine Information über die Höhe des Erntevorsatzes 16 bereit. Ein Schrägfördererumsetzer 64 stellt ein Signal bereit, das von dem Winkel des Schrägförderers 18 gegenüber dem Hauptrahmen 12 abhängt. Das Winkelsignal stellt eine Information über die Höhe des Erntevorsatzes 16 bereit. Die Signale von den Einrichtungen 62, 62t und 64 sind über Leitungen 62a und 64a (Figur 4) mit einer Steuerung 65 verbunden, die einen Prozessor 66 umfasst, der mit einer elektrohydraulischen Ventileinrichtung 67 verbunden ist, um den Hydraulikfluidfluss in einen oder zwei Hubzylinder 68 und aus ihnen hinaus zu steuern, die zwischen dem Schrägförderer 18 und dem Hauptrahmen 12 angeschlossen sind, um das Hubsystem 60 zu betreiben, um den Erntevorsatz 16 innerhalb eines ausgewählten Betriebshöhenbereichs zu halten, wenn das System automatisch betrieben wird. Der Bediener kann die Betriebshöhe unter Verwendung einer Anheb-Absenk-Steuerung 70 in der Kabine 35 auswählen und ändern. Wenn der Bediener mit dem Ernten beginnt, veranlasst er typischerweise ein Absenken des Erntevorsatzes 16 unter Verwendung der Steuerung 70 und der Zylinder 68 wird schnell eingezogen, bis eine vorausgewählte Schrägfördererposition erreicht ist, wie sie durch das Signal vom Schrägfördererumsetzer 64 angezeigt wird. Danach betreibt die Steuerung 65 unter Verwendung der Höhensignale auf den Leitungen 62a den Zylinder 68, um den Erntevorsatz 16 auf die ausgewählte Betriebsposition zu zu bewegen und hält den Erntevorsatz 16 innerhalb eines ausgewählten Betriebsbereichs. Zusätzliche Höhensteuerungssignaleingaben, wie von einem optischen System 74, können zur Verwendung bei einem automatischen Aufrechterhalten einer im Wesentlichen konstanten Schnittentfernung unterhalb der Ähren bereitgestellt sein.

Die Ventileinrichtung 67 steuert auch das Ausstrecken und Zusammenziehen eines Neigungszylinders 69, um den Erntevorsatz 16 um eine sich von vorn nach hinten erstreckende Achse zu drehen, um einen Betrieb parallel zur Bodenoberfläche durchzuführen. Wenn das Signal von einen oder mehreren Sensoren 62 und 62t auf einer Seite der Achse einem Hubsignal entspricht, während das Signal von der gegenüberliegenden Seite einem Absenksignal entspricht, wird das System den Zylinder 69 betreiben, um den Erntevorsatz 16 zur richtigen Haltungskorrektur um die Achse zu verschwenken. Wenn die Sensoren auf beiden Seiten der Achse ein Hub- oder Absenksignal bereitstellen, wird der Zylinder 68 für die nötige Höhenkorrektur entsprechend ausgestreckt oder eingezogen, um den Erntevorsatz 16 in einem vorbestimmten Betriebshöhenbereich zu halten. Ein derartiges Höhensteuerungssystem ist in der US 4 776 153 A gezeigt und beschrieben.

Die Geschwindigkeit des Mähdreschers 10 wird automatisch durch eine Geschwindigkeitssteuerung gesteuert, die insgesamt mit 80 gekennzeichnet ist und eine elektronische Steuerungseinrichtung 82 umfasst, die mit dem hydrostatischen Getriebe 15 in Betriebsverbindung steht. Die Steuerungseinrichtung 82 verstellt eine Pumpe mit variabler Ausgabe im Getriebe 15, um die Räder 14 mit der gewünschten Betriebsgeschwindigkeit anzutreiben. Der Bediener kann die Geschwindigkeit in einem manuellen Modus über einen konventionellen Hydrauliksteuerungsbedienhebel 84 steuern, der in der Kabine 35 angeordnet ist. Der Hydrauliksteuerungsbedienhebel 84 legt eine obere Geschwindigkeitsgrenze für den Bereich fest und die Geschwindigkeit ist innerhalb des Bereichs unendlich fein einstellbar. Ein Radarbodengeschwindigkeitssensor 88 oder eine andere Geschwindigkeitsanzeigeeinrichtung stellt am Eingang der Steuerungseinrichtung 82 ein Geschwindigkeitssignal bereit.

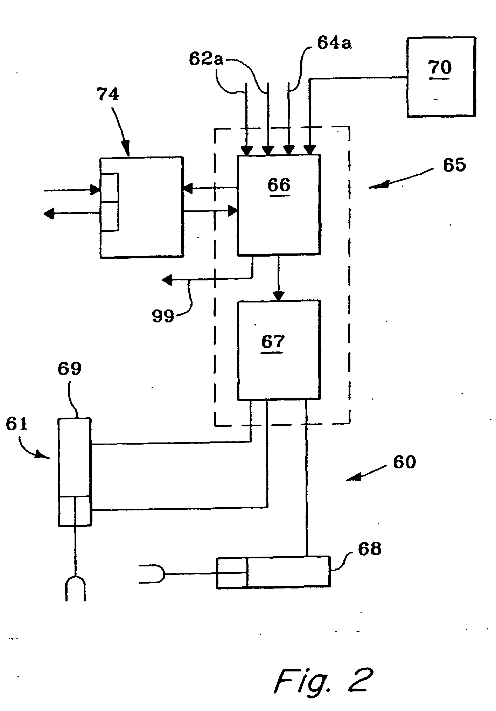

Wie in Figur 2 gezeigt, stellt ein Durchsatzwandler 90 am Eingang der Geschwindigkeitssteuerung 82 ein Durchsatzsignal bereit. Der Rotor 37 wird vorzugsweise durch einen variablen Antriebsaktor angetrieben, und der Druck des variablen Antriebsaktors wird vom Wandler 90 überwacht. Es können aber auch beliebige andere Durchsatzsensoren verwendet werden. Die Geschwindigkeitssteuerung 80 kann derart eingestellt werden, dass sie die Geschwindigkeit des Mähdreschers 10 so einstellt, dass ein im Wesentlichen konstanter Durchsatz aufrechterhalten wird, wobei die aktuelle Mähdreschergeschwindigkeit in Abhängigkeit vom Durchsatzsignal des Wandlers 90 ansteigt oder absinkt. Eingaben von Sensoren 94, die Informationen über Kornverluste (94a), Kornbeschädigungen (94b) und andere Informationen (94c) bereitstellen, welche Informationen über die Erntequalität des Mähdreschers 10 beinhalten, werden ebenfalls der Geschwindigkeitssteuerung 80 bereitgestellt, so dass Mähdreschergeschwindigkeitseinstellungen auch als Funktion der Erntequalitätssignale durchgeführt werden können. Wenn beispielsweise der Kornverlust größer als eine gewünschte obere Grenze ist, wird die Mähdreschergeschwindigkeit selbsttätig vermindert, um die Qualitätsvariable in den gewünschten Bereich zu bringen. Wenn die Erntequalitätssignale niedrige Kornverluste und/oder -beschädigungen und dergleichen anzeigen und der Durchsatz unter einem maximalen gewünschten Niveau liegt, wird die Steuerungseinrichtung 82 die Mähdreschergeschwindigkeit bis zu einer maximalen Geschwindigkeit, die durch die Einstellung des Bedienhebels 84 bestimmt ist, vergrößern. Es ist anzumerken, dass die vorliegende Erfindung mit anderen primären Geschwindigkeitssteuerungseinrichtungen und -techniken verwendet werden kann, und dass die obigen nur als Beispiel aufgeführt sind.

Die Geschwindigkeitssteuerung 80 erhält auch Vorsatzhöheninformationen vom Schrägfördererumsetzer 64 und reagiert auf einen Hinweis vom Schrägfördererumsetzer 64, dass der Erntevorsatz 16 abgesenkt wird, während Gut geschnitten wird, um verzögerungsfrei die Vortriebsgeschwindigkeit des Mähdreschers 10 zu vermindern. Wenn der Bediener die Schnitthöhe des Erntevorsatzes 16 absenkt, um beispielsweise Lagergetreide aufzunehmen, wird ein derartiges Absenken von der Steuerungseinrichtung 82 bemerkt, und die Steuerungseinrichtung 82, die einen baldigen Anstieg in dem bald vom Schrägförderer 18 aufgenommenen Materialbetrag erwartet, verringert sofort die Geschwindigkeit des Mähdreschers 10. Vorzugsweise ist die prozentuelle Verringerung der Geschwindigkeit mindestens gleich dem geschätzten prozentuellen Anstieg in dem totalen Materialvolumen, das vom Mähwerksbalken 17 abgeschnitten wird, so dass der Durchsatz im Wesentlichen konstant bleibt oder leicht abnimmt. Nach einer kurzen Verzögerung, die im Wesentlichen mit der Zeit übereinstimmt, die das erste zusätzliche Material benötigt, um komplett vom Mähdrescher 10 verarbeitet zu werden, wird wieder die normale Geschwindigkeitssteuerung aufgenommen, wie eine auf den Durchsatz- oder Erntequalitätssignalen oder dergleichen basierende Steuerung. Wenn der Bediener den Erntevorsatz 16 anhebt, während Gut geschnitten wird, und die Erntequalitäts- und/oder Durchsatzsignale zu dem Zeitpunkt, an dem der Erntevorsatz 16 angehoben wird, innerhalb akzeptabler Bereiche sind, wird die Steuerungseinrichtung 82 die Vortriebsgeschwindigkeit des Mähdreschers ohne Verzögerung anheben, um den Durchsatz auf einem im Wesentlichen konstanten Niveau zu halten. Wenn jedoch Signale von den Sensoren 90 und 94 darauf hinweisen, das zu dem Zeitpunkt, an dem der Erntevorsatz 16 angehoben wird, die Erntequalität absinkt oder der Durchsatz in Richtung auf nicht akzeptable Höhen zu ansteigt, wird die Steuerungseinrichtung 82 jede wesentliche Steigerung der Geschwindigkeit vermeiden, die auf einem Anheben des Erntevorsatzes basiert.

Eine Information über die Geschwindigkeitsänderungen im Verhältnis zu den Erntevorsatzpositionsänderungen kann entsprechend den Erntebedingungen manuell über eine Bedienerschnittstelle 104 in der Kabine 35 in einen Speicher der Steuerungseinrichtung 82 vordefiniert werden, um Änderungen der Zuführrate auszugleichen, die direkt durch eine Schnitthöhenänderung bedingt sind. Alternativ kann die Steuerungseinrichtung 82 den Effekt, den Schnitthöhenänderungen auf. die Zuführrate haben, während des anfänglichen Betriebs feststellen, und eine Tabelle mit Zuführratenänderungen für Schrägfördererpositionsänderungen wird in einem Speicher der Steuerungseinrichtung 82 zur späteren Verwendung von der Steuerungseinrichtung 82 abgelegt, um Mähdreschergeschwindigkeitsänderungen mit Schrägfördererpositionsänderungen zu korrelieren. Wenn gewünscht, kann die Steuerungseinrichtung 82 auch unscharfe Logik oder andere, anpassbare Lerntechniken enthalten, um die Wirkungen der Schrägfördererpositionsänderungen auf die Zuführratenänderungen zu lernen und die gelernte Information zu verwenden, die Geschwindigkeitsänderungen genauer mit Erntevorsatzpositionsänderungen zu korrelieren, um einen konstanten Durchsatz aufrecht zu erhalten.

Als Beispiel ist ein Flussdiagramm für den Betrieb der Steuerungseinrichtung 82 in Figur 4 dargestellt. Nachdem die Zuführratensteuerung aktiviert ist, werden bei 202 Ziele für den Durchsatz und den Kornverlust gesetzt. Anfängliche Ziele können vom Bediener basierend auf seinem Wissen und seinen Erfahrungen gesetzt werden, oder es können in einem Speicher abgelegte Ziele für das jeweilige Feld und die Gutart oder für die unmittelbar vorhergehenden Erntebedingungen ausgewählt werden.

Der Durchsatz wird als Funktion des Drucks des variablen Antriebsaktors (Wandler 90) gemessen und bleibt bei konstantem Druck im Großen und Ganzen konstant. Bei 204 werden die aktuellen Kornverluste unter Verwendung der Ausgaben der Sensoren 94a gemessen. Wenn der bei 204 gemessene Kornverlust über eine ausgedehnte Zeitperiode lückenlos hoch oder tief ist, wird der Zieldruck des variablen Antriebsaktors bei 206 langsam angepasst, um den Kornverlust auf das gewünschte Niveau zu bringen. Andere Erntequalitätseingaben können auch verwendet werden, um den Zieldruck des variablen Antriebsaktors einzustellen, wenn gewünscht.

Während des Betriebs des Mähdreschers 10 wird der Druck des variablen Antriebsaktors bei 210 kontinuierlich überwacht. Wenn der Druck des variablen Antriebsaktors von dem bei 202 - 206 eingestellten, gewünschten Bereich abweicht, wird die Mähdreschergeschwindigkeit bei 212 gesteigert oder abgesenkt, abhängig davon, ob der Druck des variablen Antriebsaktors unterhalb oder oberhalb des gewünschten Niveaus liegt. Sobald der Druck des variablen Antriebsaktors innerhalb des gewünschten Betriebsbereichs liegt, wird bei 214 der Ausgang des oder der Erntevorsatzpositionswandler(s) abgefragt, um festzustellen, ob es eine Verstellung des Erntevorsatzes 16 gegeben hat, die einen plötzlichen rampenartigen Anstieg oder ein plötzliches rampenartiges Absinken in dem Materialbetrag des in den Schrägförderer 18 eintretenden Materialbetrags bewirken wird. Wenn es eine Änderung in der Position des Schrägförderers 18 gegeben hat, wird bei 216 die Vortriebsgeschwindigkeit ohne Verzögerung verändert, um die Änderung im Materialbetrag auszugleichen. Wenn die Position sich nicht geändert hat, wird der Druck des variablen Antriebsaktors bei 210 wieder mit dem Zieldruck verglichen.

Wenn gewünscht, kann der Prozessor 66 bei 216 abgefragt werden, um festzustellen, ob die Schrägfördereränderung primär die Folge von Signalen des optischen Sensors 74 zur Erzielung einer definierten Schnitthöhe unterhalb der Ähren ist, was auf Boden- oder Gutkonturänderungen eines Typs hinweist, der den Durchsatz nicht signifikant beeinflussen wird. Wenn das der Fall ist, kann die Größe der Geschwindigkeitsänderung in 216 entsprechend vermindert werden.

Die aktuelle Korrelation zwischen Schrägfördererpositionsänderungen mit Änderungen des Drucks des variablen Antriebsaktors und die bei 216 erforderliche Änderung wird durch eine Subroutine bereitgestellt, die insgesamt mit 218 gekennzeichnet ist und mit einer Schrägfördererpositionsänderung während einer Kalibrierungsperiode begonnen wird. In der einfachsten Ausführungsform kann der Bediener während einer anfänglichen Einstellperiode über die Bedienerschnittstelle 104 gewünschte prozentuale Vortriebsgeschwindigkeitsänderungen für gegebene Schrägfördererpositionsänderungen eingeben. Wie oben jedoch beschrieben wurde, kann die Steuerungseinrichtung 82 den Effekt, den Schnitthöhenänderungen auf den Druck des variablen Antriebsaktors bedingen, während eines anfänglichen Mähdrescherbetriebs automatisch feststellen, und bei 218 wird eine Tabelle mit Änderungen des Drucks des variablen Antriebsaktors für Schrägfördererpositionsänderungen gespeichert, so dass die Vortriebsgeschwindigkeitsänderungen bei 216 entsprechend der Informationen in der Tabelle durchgeführt werden können. Wenn es gewünscht wird, kann die Steuerungseinrichtung 82 auch unscharfe Logik oder ähnliche, anpassbare lernfähige Elemente zum kontinuierlichen Lernen der Wirkungen von Zuführratenänderungen auf Erntevorsatzpositionsänderungen bei 218 umfassen. Die gelernte Information, zu gleichmäßigen Intervallen aktualisiert, wird verwendet, um Geschwindigkeitsänderungen genauer mit Erntevorsatzpositionsänderungen zu korrelieren, um zwecks im Wesentlichen konstanten Durchsatzes einen konstanten Druck des variablen Antriebsaktors aufrecht zu erhalten.

Nachdem die Vortriebsgeschwindigkeit des Mähdreschers 10 über dem Boden bei 216 verändert wurde, wird nach einer Zeitverzögerung bei 220 der Druck des variablen Antriebsaktors bei 210 wieder mit dem Zieldruck verglichen. Die Zeitverzögerung ist näherungsweise gleich mit der Zeit, die das vom Erntevorsatz 16 nach der Erntevorsatzhöhenänderung zuerst geschnittene Material benötigt, vollständig im Mähdrescher 10 verarbeitet zu werden.

## Patentansprüche

1. Erntemaschine mit einem höhenverstellbaren Erntevorsatz (16) zur Aufnahme von Erntegut und einer zum Beeinflussen der Vortriebsgeschwindigkeit der Erntemaschine eingerichteten Geschwindigkeitssteuerung (80), **dadurch gekennzeichnet, dass** der Geschwindigkeitssteuerung (80) eine Positionsinformation über die Position des Erntevorsatzes (16) zugeführt wird, und dass die Geschwindigkeitssteuerung (80) betreibbar ist, die Vortriebsgeschwindigkeit zu verändern, wenn die Positionsinformation ein Anheben und/oder Absenken des Erntevorsatzes (16) anzeigt.

2. Erntemaschine nach Anspruch 1, **dadurch gekennzeichnet, dass** die Geschwindigkeitssteuerung (80) betreibbar ist, die Vortriebsgeschwindigkeit zu vermindern, wenn die Positionsinformation ein Absenken des Erntevorsatzes (16) anzeigt.

3. Erntemaschine nach Anspruch 1 oder 2, **dadurch gekennzeichnet**, die Geschwindigkeitssteuerung betreibbar ist, die Vortriebsgeschwindigkeit zu erhöhen, wenn die Positionsinformation ein Anheben des Erntevorsatzes (16) anzeigt.

4. Erntemaschine nach einem der Ansprüche 1 bis 3, **dadurch gekennzeichnet, dass** sie einen oder mehrere Umsetzer (62, 62t, 64) zur Bereitstellung der Positionsinformation aufweist.

5. Erntemaschine nach einem der vorhergehenden Ansprüche, **dadurch gekennzeichnet, dass** die Geschwindigkeitssteuerung (80) die Vortriebsgeschwindigkeit ohne Verzögerung ändert, nachdem sie einen Hinweis auf eine Änderung der Position des Erntevorsatzes erhalten hat.

6. Erntemaschine nach einem der vorhergehenden Ansprüche, **dadurch gekennzeichnet, dass** der Betrag der Änderung der Vortriebsgeschwindigkeit von dem Betrag der Änderung der Position des Erntevorsatzes (16) abhängt.

7. Erntemaschine nach einem der vorhergehenden Ansprüche, **dadurch gekennzeichnet, dass** die Geschwindigkeitssteuerung (80) betreibbar ist, eine Positionsänderung des Erntevorsatzes (16) zu ignorieren, wenn die Positionsänderung Folge einer Änderung des Ernteguts und/oder von Bodenkonturbedingungen ist, die den Durchsatz nicht signifikant beeinflussen.

8. Erntemaschine nach einem der vorhergehenden Ansprüche, **dadurch gekennzeichnet, dass** sie mit einem zur Messung einer Erntebedingung der Erntemaschine eingerichteten Sensors versehen ist, dessen Ausgangswerte der Geschwindigkeitssteuerung (80) zugeführt werden, und dass die Geschwindigkeitssteuerung (80) eingerichtet ist, die Vortriebsgeschwindigkeit derart zu steuern, dass die Erntebedingung innerhalb eines vorbestimmten Bereichs bleibt.

9. Erntemaschine nach Anspruch 8, **dadurch gekennzeichnet, dass** der Sensor zur Messung des Gutdurchsatzes des in der Erntemaschine verarbeiteten Materials und/oder des Kornverlustes eingerichtet ist.

10. Erntemaschine nach Anspruch 8 oder 9, **dadurch gekennzeichnet, dass** die Geschwindigkeitssteuerung (80) die Vortriebsgeschwindigkeit basierend auf einer anhand der Positionsinformation errechneten Änderung der Erntebedingung bestimmt.

11. Erntemaschine nach Anspruch 10, **dadurch gekennzeichnet, dass** in der Geschwindigkeitssteuerungseinrichtung (80) eine Information über eine Änderung der Erntebedingung in Abhängigkeit von einer Änderung der Position des Erntevorsatzes (16) abgelegt ist.

12. Erntemaschine nach Anspruch 11, **dadurch gekennzeichnet, dass** die Geschwindigkeitssteuerung (80) ein lernendes, sich selbsttätig anpassendes System aufweist, das eingerichtet ist, die Änderung der Erntebedingung in Abhängigkeit von einer Änderung der Position des Erntevorsatzes (16) zu lernen.

13. Erntemaschine nach einem der Ansprüche 8 bis 12, **dadurch gekennzeichnet, dass** die Geschwindigkeitssteuerung (80) die Vortriebsgeschwindigkeit bei einer Positionsänderung des Erntevorsatzes (16) auch dann ändert, wenn das Erntebedingungssignal des Durchsatzsensors darauf hinweist, dass die Erntebedingung innerhalb des vorbestimmten Bereichs ist.

14. Erntemaschine nach einem der vorhergehenden Ansprüche, **dadurch gekennzeichnet, dass** ein Sensor (94) vorhanden ist, der Informationen über die Erntequalität der Erntemaschine bereitstellt, beispielsweise über Kornverluste oder Kornbeschädigungen, die von der Geschwindigkeitssteuerung (80) bei der Änderung der Geschwindigkeit berücksichtigt werden.

15. Erntemaschine nach Anspruch 14, **dadurch gekennzeichnet, dass** die Geschwindigkeitssteuerung (80) betreibbar ist, eine Zielbedingung der Erntequalität und eine Zielbedingung des Durchsatzes festzulegen, und dass sie betreibbar ist, die gemessene Erntequalität zu überwachen und die bei der Einstellung der Geschwindigkeit berücksichtigte Zielbedingung des Durchsatzes zu ändern, wenn die überwachte Erntequalität von der Zielbedingung der Erntequalität abweicht.

16. Erntemaschine nach einem der vorhergehenden Ansprüche, **dadurch gekennzeichnet, dass** die Geschwindigkeitssteuerung (80) nach einer Geschwindigkeitsänderung in Folge einer Positionsänderung des Vorsatzes (16) nach dem Ablauf einer vorausgewählten Verzögerungszeit, die mindestens der Durchlaufzeit des Ernteguts vom Erntevorsatz (16) bis zu einem Sensor zur Messung einer Erntebedingung entspricht, wieder zu einer auf dem Messwert des Sensors basierenden Vortriebsgeschwindigkeitsbestimmung zurückkehrt.

## Claims

1. A harvesting machine with a harvesting header (16) of adjustable height for receiving crop and a speed control unit (80) for affecting the speed of propulsion of the harvesting machine, **characterized in that** position information regarding the position of the harvesting header (16) is provided to the speed control unit (80) and **in that** the speed control unit (80) is operable to alter the speed of propulsion when the position information indicates raising and/or lowering of the harvesting header (16).

2. A harvesting machine according to claim 1, **characterized in that** the speed control unit (80) is operable to reduce the speed of propulsion when the position information indicates a lowering of the harvesting header (16).

3. A harvesting machine according to claim 1 or 2, **characterized in that** the speed control unit is operable to increase the speed of propulsion when the position information indicates a raising of the harvesting header (16).

4. A harvesting machine according to any of claims 1 to 3, **characterized in that** it comprises one or more transducers (62, 62t, 64) for providing the position information.

5. A harvesting machine according to any of the preceding claims, **characterized in that** the speed control unit (80) alters the speed of propulsion without delay after it has received an indication of a change in the position of the harvesting header.

6. A harvesting machine according to any of the preceding claims, **characterized in that** the amount of change in the speed of propulsion depends on the amount of the change in position of the harvesting header (16).

7. A harvesting machine according to any of the preceding claims, **characterized in that** the speed control unit (80) is operable to ignore a change in position of the harvesting header (16) when the change in position follows a change of the crop and/or of ground contour which does not alter the throughput significantly.

8. A harvesting machine according to any of the preceding claims, **characterized in that** it is provided with a sensor arranged to measure a harvesting condition of the harvesting machine and whose output values are provided to the speed control unit (80), and **in that** the speed control unit (80) is arranged so to control the speed of propulsion that the harvesting condition remains within a predetermined range.

9. A harvesting machine according to claim 8, **characterized in that** the sensor is arranged to measure the crop throughput of the material processed in the harvesting machine and/or the grain loss.

10. A harvesting machine according to claim 8 or 9, **characterized in that** the speed control unit (80) determines the speed of propulsion on the basis of a change in the harvesting computed on the basis of the position information.

11. A harvesting machine according to claim 10, **characterized in that** information on a change in the harvesting condition in dependence on a change in the position of the harvesting header (16) is entered in the speed control unit (80).

12. A harvesting machine according to claim 11, **characterized in that** the speed control unit (80) comprises a learning, automatically adaptive system which is arranged to learn the change in the harvesting in dependence on a change in the position of the harvesting header (16).

13. A harvesting machine according to any of claims 8 to 12, **characterized in that** the speed control unit (80) changes the speed of propulsion on a change of position of the harvesting header (16), even when the crop condition signal of the throughput sensor indicates that the harvesting condition is within the predetermined range.

14. A harvesting machine according to any of the preceding claims, **characterized in that that** a sensor (94) is provided to provide information on the harvesting quality of the harvesting machine, for example in respect of grain losses or damage to grain, which information is taken into account by the speed control unit (80) on changing the speed.

15. A harvesting machine according to claim 14, **characterized in that** the speed control unit (80) is operable to establish a target condition of the harvesting quality and a target condition of the throughput, and **in that** it is operable to monitor the measured harvesting quality and to alter the target condition of the throughput taken into account in the adjustment of the speed when the monitored harvesting quality deviates from the target condition of the harvesting quality.

16. A harvesting machine according to any of the preceding claims, **characterized in that** the speed control unit (80) returns to a speed of propulsion determination based on the measured value of a sensor for measuring a harvesting condition after a change of speed of propulsion consequent on a change in position of the harvesting header (16) after elapse of a predetermined delay time which corresponds at least to the time of passage of the crop from the harvesting header (16) to the sensor.

## Revendications

1. Machine de récolte comportant un dispositif de récolte antérieur (16) réglable en hauteur, destiné à recevoir les végétaux récoltés, et un dispositif de commande de la vitesse (80), conçu pour influer sur la vitesse d'avance de la machine de récolte, **caractérisée en ce qu'**une information de positionnement contenant la position du dispositif de récolte antérieur (16) est acheminée vers le dispositif de commande de la vitesse (80), et **en ce que** le dispositif de commande de la vitesse (80) peut être exploité pour faire varier la vitesse d'avance lorsque l'information de positionnement signale une élévation et/ou un abaissement du dispositif de récolte antérieur (16).

2. Machine de récolte selon la revendication 1, **caractérisée en ce que** le dispositif de commande de la vitesse (80) peut être exploité pour réduire la vitesse d'avance lorsque l'information de positionnement signale un abaissement du dispositif de récolte antérieur (16).

3. Machine de récolte selon la revendication 1 ou 2, **caractérisée en ce que** le dispositif de commande de la vitesse (80) peut être exploité pour augmenter la vitesse d'avance lorsque l'information de positionnement signale une élévation du dispositif de récolte antérieur (16).

4. Machine de récolte selon l'une quelconque des revendications 1 à 3, **caractérisée en ce qu'**elle comporte un ou plusieurs transpondeurs (62, 62t, 64) pour la mise à disposition de l'information de positionnement.

5. Machine de récolte selon l'une quelconque des revendications précédentes, **caractérisée en ce que** le dispositif de commande de la vitesse (80) modifie sans délai la vitesse d'avance après avoir été informé d'une variation de la position du dispositif de récolte antérieur (16).

6. Machine de récolte selon l'une quelconque des revendications précédentes, **caractérisée en ce que** la valeur de la variation de la vitesse d'avance dépend de la valeur de la variation de la position du dispositif de récolte antérieur (16).

7. Machine de récolte selon l'une quelconque des revendications précédentes, **caractérisée en ce que** le dispositif de commande de la vitesse (80) peut être exploité pour ignorer une variation de position du dispositif de récolte antérieur (16), lorsque la variation de position résulte d'une modification des végétaux récoltés et/ou des conditions de contour du sol, lesquelles n'influent pas de manière significative sur le débit.

8. Machine de récolte selon l'une quelconque des revendications précédentes, **caractérisée en ce qu'**elle est équipée d'un capteur, qui est conçu pour mesurer une condition de récolte de la machine de récolte et dont les valeurs de sortie sont acheminées vers le dispositif de commande de la vitesse (80), et **en ce que** le dispositif de commande de la vitesse (80) est conçu pour commander la vitesse d'avance de telle sorte que la condition de récolte est maintenue à l'intérieur d'un domaine prédéfini.

9. Machine de récolte selon la revendication 8, **caractérisée en ce que** le capteur est conçu pour mesurer le débit des végétaux traités dans la machine de récolte et/ou les pertes de grains.

10. Machine de récolte selon la revendication 8 ou 9, **caractérisée en ce que** le dispositif de commande de la vitesse (80) détermine la vitesse d'avance en se basant sur une variation de la condition de récolte calculée à l'appui de l'information de positionnement.

11. Machine de récolte selon la revendication 10, **caractérisée en ce que** dans le dispositif de commande de la vitesse (80) est stockée une information sur une variation de la condition de récolte en fonction d'une variation de la position du dispositif de récolte antérieur (16).

12. Machine de récolte selon la revendication 11, **caractérisée en ce que** le dispositif de commande de la vitesse (80) comporte un système adaptatif, qui s'adapte automatiquement et qui est conçu pour apprendre la variation de la condition de récolte en fonction d'une variation de la position du dispositif de récolte antérieur (16).

13. Machine de récolte selon l'une quelconque des revendications 8 à 12, **caractérisée en ce que** le dispositif de commande de la vitesse (80) fait varier la vitesse d'avance en cas de changement de position du dispositif de récolte antérieur (16) même si le signal de condition de récolte du capteur de débit indique que la condition de récolte se situe à l'intérieur du domaine prédéfini.

14. Machine de récolte selon l'une quelconque des revendications précédentes, **caractérisée en ce qu'**il est prévu un capteur (94) qui met à disposition des informations sur la qualité de récolte de la machine de récolte, telles que des informations sur les pertes de grains ou les détériorations des grains, lesquelles sont prises en compte par le dispositif de commande de la vitesse (80) lors de la variation de la vitesse.

15. Machine de récolte selon la revendication 14, **caractérisée en ce que** le dispositif de commande de la vitesse (80) peut être exploité pour définir une condition cible de la qualité de récolte et une condition cible du débit, et **en ce que** ledit dispositif peut être exploité pour surveiller la qualité de récolte mesurée et pour modifier la condition cible du débit, prise en compte lors du réglage de la vitesse, lorsque la qualité de récolte surveillée se différencie de la condition cible de la qualité de récolte.

16. Machine de récolte selon l'une quelconque des revendications précédentes, **caractérisée en ce que**, à la suite d'une variation de vitesse résultant d'une variation de la position du dispositif de récolte antérieur (16), le dispositif de commande de la vitesse (80) revient à une détermination de la vitesse d'avance basée sur la valeur de mesure du capteur après l'écoulement d'un temps de retard présélectionné qui correspond au moins au temps de passage des végétaux récoltés par le dispositif de récolte antérieur (16) jusqu'à un capteur de mesure de la condition de récolte.
